# EUROPÄISCHE PATENTSCHRIFT

(11) **EP 1 879 781 B1**
(45) Veröffentlichungstag und Bekanntmachung des Hinweises auf die Patenterteilung: **29.12.2010**
(21) Anmeldenummer: 06754924.6
(22) Anmeldetag: 28.04.2006
(51) Int. Cl.: B62D 7/14

(54) **LENKVORRICHTUNG, INSBESONDERE FÜR EINE HINTERRADLENKUNG**
STEERING MECHANISM, ESPECIALLY FOR A REAR WHEEL STEERING MECHANISM
DISPOSITIF DE DIRECTION, CONÇU EN PARTICULIER POUR UNE DIRECTION DE ROUE ARRIERE

(30) Priorität: 02.05.2005 DE 102005020422; 02.05.2005 DE 102005020396; 26.04.2006 DE 102006020041
(43) Veröffentlichungstag der Anmeldung: 23.01.2008
(73) Patentinhaber: Continental Teves AG & Co. oHG, 60488 Frankfurt am Main (DE)
(72) Erfinder: JUNGBECKER, Johann, 555761 Badenheim (DE); LINKENBACH, Steffen, 65760 Eschborn (DE); MUTH, Norman, 35066 Frankenberg (DE)
(86) Internationale Anmeldenummer: PCT/EP2006/061925
(87) Internationale Veröffentlichungsnummer: WO 2006/117343

(56) Entgegenhaltungen:
- EP-A- 0 323 815
- EP-A- 0 340 823
- DE-A1- 3 827 039
- DE-A1- 10 064 585
- US-A- 5 292 149
- PATENT ABSTRACTS OF JAPAN Bd. 011, Nr. 281 (M-624), 11. September 1987 (1987-09-11) -& JP 62 080173 A (MAZDA MOTOR CORP), 13. April 1987 (1987-04-13)
- PATENT ABSTRACTS OF JAPAN Bd. 008, Nr. 064 (M-285), 27. März 1984 (1984-03-27) -& JP 58 214470 A (NISSAN JIDOSHA KK), 13. Dezember 1983 (1983-12-13)

## Beschreibung

Die Erfindung betrifft eine Lenkvorrichtung zum Einstellen eines Radeinschlagswinkels eines Rades eines Kraftfahrzeugs, insbesondere eines Hinterrades, umfassend wenigstens ein Radführungsglied, über das ein Radträger des Rades mit einem Fahrzeugaufbau verbunden ist, wobei der Radträger um eine im Wesentlichen parallel zur Radebene verlaufende Drehachse schwenkbar ist und das Radführungsglied beabstandet von der Drehachse an dem Radträger angelenkt ist, und wobei das Radführungsglied mittels einer Antriebseinheit in seiner Länge verstellbar ist.

Bekannte Lenkvorrichtungen für eine Hinterachslenkung weisen ähnlich wie konventionelle Vorderachslenkungssysteme eine Spurstange auf, die das rechte und linke Hinterrad miteinander verbindet. Das Einstellen eines Radeinschlagswinkels erfolgt dabei durch eine elektromechanisch oder elektrohydraulisch gesteuerte Verschiebung der Spurstange. Derartige Lenkvorrichtungen erfordern jedoch einen erheblichen konstruktiven Aufwand.

Aus der EP 0 340 823 A ist eine Lenkvorrichtung der eingangs genannten Gattung bekannt. Bei der vorbekannten Lenkvorrichtung ist eine Einrichtung zum Erfassen der Fahrzeuggeschwindigkeit und weiterer Werte vorgesehen, wobei die Ansteuerung der Lenkvorrichtung auf Grundlage der Fahrzeuggeschwindigkeit und der weiteren Werte erfolgt.

Aus der deutschen Offenlegungsschrift DE 40 20 547 A1 ist eine Vorrichtung zum Verstellen des Radeinschlagswinkels der Hinterräder bekannt, bei der eine Spurstange und ein Radführungslenker über ein Kipphebelelement an einem Radträger gehalten sind. Die Spurstange ist über einen Hebel mit einer Kolbenstange eines hydraulischen Stellgliedes verbunden, das ein Verschwenken des Rades steuert. Diese Vorrichtung erfordert jedoch eine spezielle Radaufhängung, wodurch ebenfalls ein beträchtlicher konstruktiver Aufwand entsteht.

Beim Ausfall der Antriebseinheit der vorbekannten Lenkvorrichtungen entsteht eine ungewollte Radlenkbewegung aufgrund einer ungewollten Längenänderung.

Es ist daher eine Aufgabe der vorliegenden Erfindung, eine Lenkvorrichtung der eingangs genannten Art zu schaffen, die in besonders einfacher Weise eine ungewollte Radlenkbewegung beim Ausfall der Antriebseinheit verhindert.

Erfindungsgemäß wird diese Aufgabe durch eine Lenkvorrichtung mit den Merkmalen des Anspruchs 1 gelöst.

Demgemäß wird eine Lenkvorrichtung zum Einstellen eines Radeinschlagswinkels bereitgestellt, deren Antriebseinheit eine Blockiereinrichtung aufweist, bei der wenigstens ein Magnetstößel durch ein Ausschalten eines Elektromagneten formschlüssig in eine Aufnahme einer Mutter oder eines Kupplungselements einführbar ist, wodurch die Antriebseinheit blockierbar ist.

Bei dieser Lenkvorrichtung wird ein Radführungsglied einer konventionellen Radaufhängung durch ein in seiner Länge verstellbares Radführungsglied ersetzt. Eine Längenveränderung des Radführungsgliedes führt dabei zu einer Veränderung des Radeinschlagswinkels des Rades.

Die Radaufhängung braucht im Übrigen nicht verändert zu werden und die Lenkvorrichtung ist in einfacher Weise in eine herkömmliche Radaufhängung integrierbar.

Die Drehachse der erreichbaren Schwenkbewegung der Räder ist in der Regel insbesondere aufgrund des Sturzes der Räder nicht vollständig parallel zu der Radebene. Die Abweichung entspricht dabei dem Sturzwinkel der Räder.

Vorzugsweise ist es vorgesehen, dass das Radführungsglied eingliedrig ausgeführt ist und über ein erstes Gelenk an dem Fahrzeugaufbau und über ein zweites Gelenk an dem Radträger angelenkt ist.

Unter dem Begriff eingliedrig wird dabei verstanden, dass das Radführungsglied im Übrigen keine Schwenkgelenke aufweist. Es ist somit in sich starr ausgeführt, wie es üblicherweise auch bei den Radführungsgliedern konventioneller Radaufhängungen der Fall ist.

In einer besonders bevorzugten Ausführungsform der Erfindung ist es vorgesehen, dass es sich bei dem Radführungsglied um eine Spurstange und/oder einen Querlenker einer Einzelradaufhängung handelt.

Ferner sieht eine bevorzugte Ausführungsform der Erfindung vor, dass das Radführungsglied ein Gehäuse und eine Schubstange umfasst, die mittels einer elektromechanischen Antriebseinheit axial gegeneinander verschiebbar sind.

Insbesondere gegenüber einer ebenfalls denkbaren hydraulischen Antriebseinheit ist diese Ausgestaltung bevorzugt, da auf eine Druckversorgungseinrichtung verzichtet werden kann.

Eine ebenfalls bevorzugte Ausführungsform der Erfindung zeichnet sich dadurch aus, dass die Antriebseinheit in dem Gehäuse enthalten ist.

Hierdurch wird eine besonders kompakte Bauweise des längenverstellbaren Radführungsgliedes erreicht, so dass dieses in einfacher Weise in die konventionelle Radaufhängung integriert werden kann, ohne einen zu großen Einbauraum zu benötigen.

Eine vorteilhafte Ausgestaltung der Erfindung beinhaltet, dass die Antriebseinheit einen Elektromotor und einen von dem Elektromotor angetriebenen Gewindespindel-Mutter-Trieb enthält, der eine Mutter aufweist, die in einen Spindelabschnitt der Schubstange eingreift.

Eine vorteilhafte Weiterbildung der Erfindung ist **dadurch gekennzeichnet, dass** es sich bei dem Gewindespindel-Mutter-Trieb um einen Kugelgewindetrieb handelt.

Auf diese Weise wird ein besonders hoher Wirkungsgrad der Antriebseinheit erreicht.

In der Regel wirken im beladenen Zustand Druckkräfte in Richtung des Fahrzeugaufbaus auf die Radführungsglieder einer Radaufhängung. Bei einer Längenvergrößerung muss die Antriebseinheit gegen die Druckkräfte arbeiten, während diese eine Längenverringerung unterstützen. Dies hat einen unsymmetrischen und energetisch ungünstigen Motorbetrieb zur Folge.

Um die Druckkräfte zumindest teilweise zu kompensieren und damit einen symmetrischen und energetisch günstigen Motorbetrieb zu gewährleisten, sieht eine besonders bevorzugte Ausführungsform der Erfindung vor, dass die Schubstange mittels einer Kompensationsfeder an dem Gehäuse abgestützt ist.

Vorzugsweise ist es vorgesehen, dass die Federkraft der Kompensationsfeder einer Längenverringerung des Radführungsgliedes entgegenwirkt und die wirkenden Druckkräfte somit abstützt.

Darüber hinaus ist es bei einer zweckmäßigen Ausgestaltung der Erfindung vorgesehen, dass eine Antriebswelle des Elektromotors über ein Getriebe mit der Mutter des Gewindespindel-Mutter-Triebes verbunden ist.

Eine vorteilhafte Weiterbildung der Erfindung zeichnet sich dadurch aus, dass das Getriebe und/oder der Gewindespindel-Mutter-Trieb die Blockiereinrichtung aufweist.

Wie bereits ausgeführt kann mittels der Blockiereinrichtung die Antriebseinheit bei unbestromtem Motor blockiert werden, um eine ungewollte Längenänderung des Radführungsgliedes bzw. eine ungewollte Lenkbewegung des Rades zu verhindern.

Eine vorteilhafte Ausgestaltung der Erfindung beinhaltet, dass ein Klemmring fest mit einer inneren Wand des Gehäuses verbunden ist und das Getriebe ein im Außenbereich des Klemmrings drehbar gelagertes Kupplungselement aufweist, wobei das Kupplungselement mit der Mutter des Gewindespindel-Mutter-Triebes, die im Innenbereich des Klemmrings drehbar gelagert ist, im Eingriff steht.

Vorzugsweise ist es vorgesehen, dass mehrere Aufnahmen für den Magnetstößel regelmäßig beanstandet auf dem Umfang der Mutter und/oder des Kupplungselements angeordnet sind.

Auf diese Weise lässt sich die Mutter des Gewindespindel-Mutter-Triebes vorteilhaft in einer Vielzahl von regelmäßig beabstandeten Winkelstellungen mittels des Magnetstößels blockieren.

Eine vorteilhafte Weiterbildung der Erfindung zeichnet sich dadurch aus, dass das Getriebe eine Freilaufeinrichtung aufweist, die in einem ersten Drehmomentbereich einen Freilauf der Mutter des Gewindespindeltriebes und in einem zweiten Drehmomentbereich eine Blockierung der Mutter bewirkt.

Durch den Einsatz einer derartigen Freilaufeinrichtung, die im Freilaufzustand keine oder nur sehr geringe Reibungsverluste aufweist, kann der mechanische Wirkungsgrad der Antriebseinheit weiter erhöht werden.

In einer vorteilhaften Ausgestaltung der Erfindung ist es vorgesehen, dass die Freilaufeinrichtung zwei Klemmkörper umfasst, die innerhalb eines von dem Elektromotor antreibbaren Freilaufkäfigs zwischen dem Klemmring und dem Kupplungselement gehalten werden, wobei ein Eingriffszapfen des Freilaufkäfigs in eine Öffnung des Kupplungselements mit Spiel eingreift und wobei die Klemmkörper mittels an dem Eingriffszapfen angreifenden und in Umfangsrichtung des Freilaufkäfigs ausgerichteten Druckfedern in keilförmige Taschen des Kupplungselements gedrückt werden und durch Aussparungen eines mit dem Freilaufkäfig verbundenen Freistellelements hindurch mit dem Klemmring in Kontakt bringbar sind.

Wenn die Klemmelemente mit dem Klemmring in Kontakt stehen, befindet sich die Freilaufeinrichtung in der Sperrstellung. Auf die Radaufhängung wirkende Störkräfte, die über den Gewindespindel-Mutter-Trieb auf das Kupplungselement übertragen werden, werden in der Sperrstellung in den Klemmring abgeleitet und führen nicht zu einer ungewollten Längenänderung des Radführungsgliedes.

Bei ebenfalls vorteilhaften Ausgestaltung der Erfindung ist es vorgesehen, dass die Klemmkörper bei einer Rotationsbewegung des Freilaufkäfigs aufgrund einer Bewegung des Eingriffszapfens in der Öffnung des Kupplungselements aus den Aussparungen des Freistellelements gedrückt werden und den Kontakt zu dem Klemmring verlieren.

Auf diese Weise gelangt die Freilaufeinrichtung in die Freilaufstellung, die eine motorgesteuerte Längenveränderung des Radführungsgliedes gestattet.

Zur Erfassung der jeweils aktuellen Länge des Radführungsgliedes bzw. zur Ermittlung des hierzu proportionalen Radeinschlagswinkels ist es bei einer vorteilhaften Ausführungsform der Erfindung vorgesehen, dass die relative Lage der Schubstange in Bezug auf das Gehäuse mittels eines berührungslosen Wegsensors erfassbar ist.

Die Erfindung stellt darüber hinaus ein Kraftfahrzeug bereit, das ein rechtes und ein linkes Hinterrad umfasst, und dadurch gekennzeichnet ist, dass beiden Hinterrädern jeweils eine Lenkvorrichtung der zuvor dargestellten Art zugeordnet ist.

Eine besonders vorteilhafte Weiterbildung der Erfindung beinhaltet, dass das längenverstellbare Radführungsglied des rechten Hinterrades unabhängig von dem längenverstellbaren Radführungsglied des linken Hinterrades in seiner Länge verstellbar ist.

Weitere Vorteile, Besonderheiten und zweckmäßige Weiterbildungen der Erfindung ergeben sich aus den Unteransprüchen und der nachfolgenden Darstellung bevorzugter Ausführungsbeispiele anhand der Figuren.

Von den Figuren zeigt
- Fig. 1: einen Hinterachsintegralträger nach dem Stand der Technik,
- Fig. 2: ein in seiner Länge verstellbares Radführungsglied,
- Fig. 3: eine schematische Darstellung eines Kraftfahrzeugs mit einem Hinterachsträger, der ein in ihrer Länge verstellbare Radführungsglieder umfasst,
- Fig. 4: eine schematische Darstellung des Aufbaus des in sei- ner Länge veränderlichen Radführungsgliedes,
- Fig. 5: einen Querschnitt durch ein erfindungsgemäßes Radfüh- rungsglied in einer ersten Ausführungsform,
- Fig. 6a: einen Querschnitt durch Freilaufeinrichtung eines er- findungsgemäßen Radführungsgliedes in einem Sperrzu- stand,
- Fig. 6b: einen Querschnitt durch Freilaufeinrichtung eines er- findungsgemäßen Radführungsgliedes in einem Freilauf- zustand und
- Fig. 7: einen Querschnitt durch ein erfindungsgemäßes Radfüh- rungsglied in einer zweiten Ausführungsform.

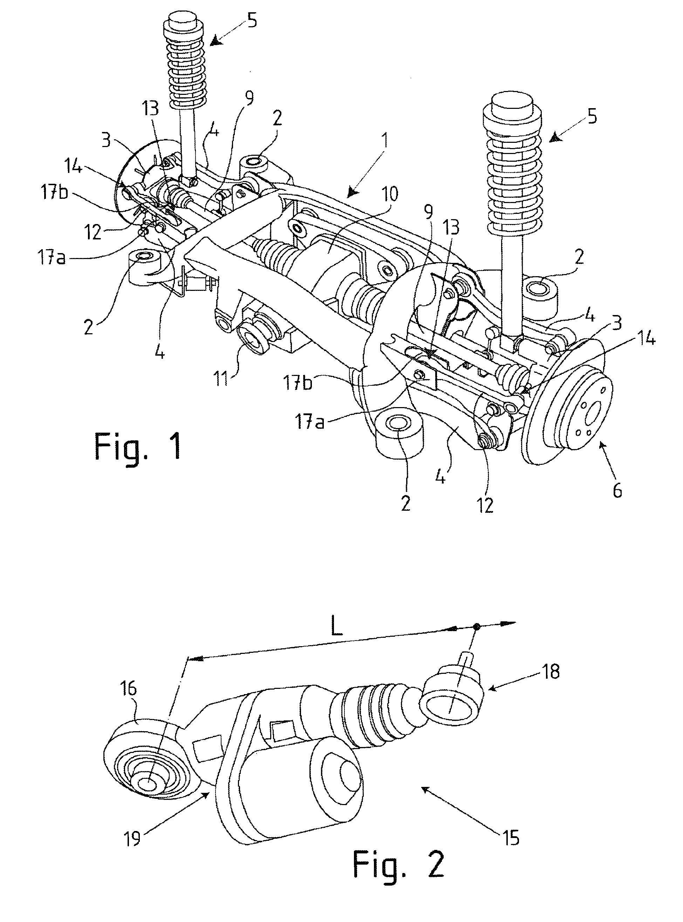

Figur 1 zeigt einen Hinterachsintegralträger für eine angetriebene Hinterachse eines Kraftfahrzeugs, wie er aus dem Stand der Technik an sich bekannt ist. Er weist einen Hilfsrahmen 1 auf, der an Befestigungspunkten 2 mit einer in Figur 1 nicht dargestellten Karosserie des Fahrzeugs verbunden wird. Radträger 3 sind über Radführungslenker 4 gelenkig mit dem Hilfsrahmen 1 verbunden. Ferner ist jeweils ein Federbein 5 zur Abstützung an der Karosserie fest an den Radträgern 3 montiert. In Figur 1 sind zudem an den Radträgern montierte Radlagerungen 6 dargestellt. Die an die Radträger 3 bzw. die Radlagerungen 6 montierbaren Hinterräder des Fahrzeugs werden jeweils durch eine Radantriebswelle 9 angetrieben. Die Radantriebswellen 9 sind dabei über ein Differentialgetriebe 10 miteinander verbunden, das einen in Fahrzeuglängsrichtung nach vorne gerichteten Flansch 11 zum Anflanschen einer durch den Fahrzeugmotor angetriebene Welle aufweist.

Zwischen dem Hilfsrahmen 1 und den Radträgern 3 befindet sich ferner jeweils eine Spurstange 12 mit fester Länge, die durch jeweils ein Schwenklager 13, 14 mit dem Hilfsrahmen 1 einerseits und dem Radträger 3 andererseits verbunden ist.

Die Erfindung sieht vor, ein längefesten Radführungsglied auf jeder Seite des Hinterachsintegralträgers durch ein Radführungsglied zu ersetzen, das in seiner Länge verstellbar ist. Vorzugsweise ist es dabei vorgesehen, die Spurstangen 12 jeweils durch eine in Figur 2 dargestellte Spurstange 15 zu ersetzen, die in ihrer Länge L veränderbar ist.

Die Spurstange 15 weist zur Befestigung an dem Hilfsrahmen 1 einen Lagermittelsteg 16 auf, der zusammen mit den Lagerseitenstegen 17a, 17b (Figur 1) des Hilfsrahmens 1 das Schwenklager 13 bildet. Über das radträgerseitige Gelenk 18, welches das Schwenklager 14 bildet, kann die Spurstange 17 an den Radträger 3 angelenkt werden.

Der Lagermittelsteg 16 ist an einem Gehäuse 19 befestigt, das einen Motor enthält, mit dem über ein Getriebe eine Schubstange 51 distal und proximal bewegt werden kann, um die Spurstange 15 zu verlängern oder zu verkürzen. An der Schubstange ist dabei das radträgerseitige Gelenk 18 angeordnet.

Durch die Längenänderung kann der Radeinschlagswinkel der an den Radträgern 3 montierten Hinterräder verändert werden. Bei der dargestellten Ausführungsform erfolgt insbesondere bei einer Verlängerung der Spurstange eine Veränderung des Radeinschlagswinkels in Richtung Vorspur und bei einer Verkürzung eine Veränderung in Richtung Nachspur. Die Drehachsen der Lenkbewegung verlaufen bei der in Figur 1 dargestellten Ausführungsform der Erfindung entlang der Längsausdehnung der Federbeine 5.

Eine Modifikation der übrigen Radführungslenker 4 ist in der Regel nicht erforderlich, da Radaufhängungen üblicherweise ein Verschwenken der Räder in Richtung Vor- und Nachspur zulassen. Ohne weitere Modifikationen lassen sich dabei insbesondere Radeinschlagswinkel realisieren, die im Bereich der Radeinschlagswinkel aufgrund von elastokinematischen Lenkbewegung liegen und für eine wirkungsvolle Beeinflussung der Fahrdynamik bereits ausreichend groß sind. Gleichfalls kann es jedoch auch vorgesehen sein, die Radaufhängung so zu modifizieren, dass größere Lenkeinschläge möglich sind.

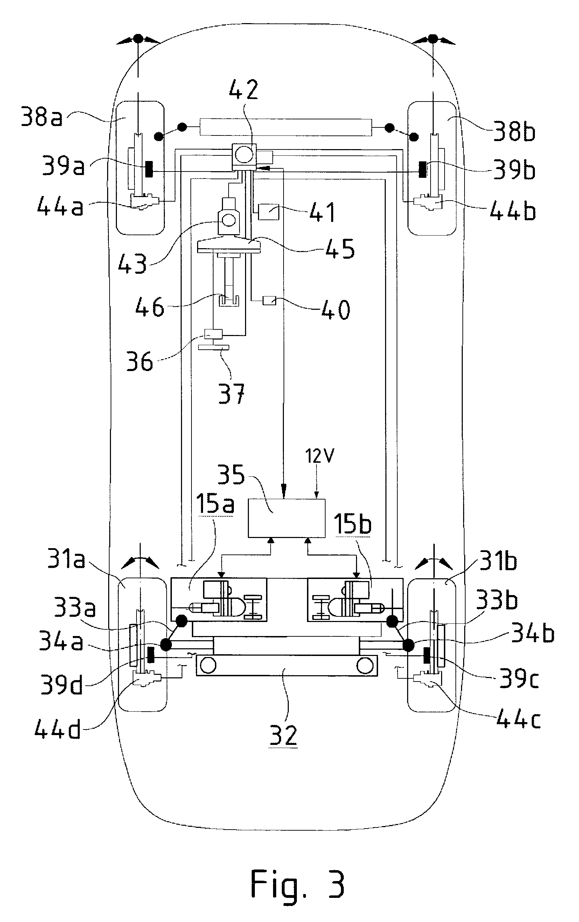

Figur 3 zeigt in schematischer Darstellung ein vierrädriges Kraftfahrzeug mit einem linken Hinterrad 31a und einem rechten Hinterrad 31b. Die Hinterräder 31a, 31b sind durch einen Hinterachsträger 32 an dem Fahrzeug befestigt, bei dem es sich beispielsweise um den in Figur 1 dargestellten Hinterachsintegralträger handeln kann. Jedem Hinterrad 31a, 31b ist eine Spurstange 15a und 15b zugeordnet, bei der es sich jeweils um eine in ihrer Länge verstellbare Spurstange 15 handelt. Die Spurstangen greifen über in der Figur schematisch dargestellte Hebel 33a, 33b an die Hinterräder 31a, 31b an, so dass diese sich aufgrund von Längenänderungen der Spurstangen 15a, 15b bezüglich einer Schwenkachse 34a, 34b um einen Winkel verschwenken lassen. Die Hebel 33a, 33b ergeben sich bei dem in Figur 1 dargestellten Hinterachsintegralträger dadurch, dass die Spurstangen 12 bzw. 15a und 15b außerhalb der Mittelpunkte der Radträger 3 an diese angreifen.

Die Ansteuerung der Spurstangen erfolgt durch ein Hinterachslenkungssteuergerät 35, mit dem die Spurstangen 15a, 15b jeweils über eine elektronische Schnittstelle verbunden sind. Das Hinterachslenkungssteuergerät 35 wird dabei über die 12-Volt-Versorgungsspannung des Bordnetzes des Fahrzeugs versorgt. Über die Schnittstelle können insbesondere Steuerbefehle zur Ansteuerung des Motors der Spurstangen 15a, 15b einerseits sowie andererseits Signale von Wegsensoren, welche die Position der Schubstange innerhalb des Gehäuses der Spurstange erfassen, übermittelt werden. Innerhalb des Hinterachslenkungssteuergerätes 35 kann aus diesen Signalen der jeweils aktuelle Radeinschlagswinkel der Hinterräder 31a, 31b ermittelt werden. Die beiden Spurstangen 15a, 15b stellen dabei eigenständige Module dar, die unabhängig voneinander angesteuert werden können, so dass an jedem Hinterrad 31a, 31b grundsätzlich ein frei wählbarer Radeinschlagswinkel eingestellbar ist. Die Ansteuerung erfolgt anhand eines Regelverfahrens in Abhängigkeit von verschiedenen Fahrzeuggrößen, die insbesondere mit Hilfe von Sensoren gemessen werden. Vorzugsweise wird zur Durchführung des Regelverfahrens die Sensorik eines Fahrdynamikregelsystems, beispielsweise eines ESP-Systems (ESP: Electronic Stability Program), verwendet. Diese umfasst üblicherweise einen Lenkwinkelsensor 36 zum Erfassen des Lenkwinkels, den der Fahrer mittels einer Lenkhandhabe 37 an den lenkbaren Vorderrädern 38a, 38b eingestellt hat, einen Raddrehzahlsensor 39a, 39b, 39c, 39d an jedem Rad des Fahrzeugs, einen Pedalwegsensor 40 zum Erfassen der Stellung des Fahrpedals, sowie einen Gierratensensor bzw. einen Sensorcluster 41, der einen Gierratensensor, einen Querbeschleunigungssensor und einen Längsbeschleunigungssensor enthält.

Diese Signale werden üblicherweise in einem ESP-Steuergerät empfangen und ausgewertet. Das ESP-Steuergerät ist üblicherweise mit einer elektrohydraulischen Einheit zur Durchführung von Bremseneingriffen in einer Baugruppe 42 integriert. Über die elektrohydraulische Einheit ist dabei der Hauptbremszylinder 43 der hydraulischen Fahrzeugbremsanlage mit den Radbremsen 44a, 44b, 44c, 44d verbunden. Mithilfe elektronisch steuerbarer Ventile lässt sich dabei der von dem Fahrer über den Bremskraftverstärker 45 mittels einer Bremsenbetätigungseinrichtung 46 aufgebaute Bremsdruck radindividuell modifizieren. Ferner verfügt die Hydraulikeinheit über eine Druckaufbaueinrichtung, mit der fahrerunabhängig Bremseneingriffe zur Stabilisierung des Fahrzeugs vorgenommen werden können, die von dem ESP-Steuergerät aufgrund eines dem Fachmann an sich bekannten Regelverfahrens gesteuert werden.
Bei der in Figur 3 dargestellten Ausführungsform der Erfindung ist eine Schnittstelle zur Signalübertragung zwischen dem ESP-Steuergerät und dem Hinterachslenkungssteuergerät 35 vorgesehen. Die Signalübertragung kann dabei beispielsweise über einen Datenbussystem wie das üblicherweise in Kraftfahrzeugen eingesetzte CAN (Controller Area Network) erfolgen.

Die Schnittstelle kann zur Übertragung der Signale der ESP-Sensorik an das Hinterachslenkungssteuergerät 35 genutzt werden, welches in Abhängigkeit von den Sensorsignalen anhand eines Regelverfahrens Sollwertvorgaben für die Radeinschlagswinkel der Hinterräder 31a, 31b bzw. die Längen der Spurstangen 15a, 15b generiert. Gleichfalls kann es auch vorgesehen sein, dass diese Sollwertvorgaben in dem ESP-Steuergerät bestimmt und über die Schnittstelle an das Hinterachslenkungssteuergerät 35 übertragen werden, welches die Spurstangen 15a, 15b dann entsprechend der Sollwertvorgaben ansteuert.

Grundsätzlich können die Hinterräder 31a, 31b dabei gleichsinnig oder gegensinnig in Bezug auf die Lenkbewegung der Vorderräder 38a, 38b eingelenkt werden. Durch ein gleichsinniges Einlenken der Hinterräder 31a, 31b und der Vorderräder 38a, 38b verringert sich bei gleichbleibendem Lenkwinkel an den Vorderrädern 38a, 38b der Kurvenradius, so dass eine Erhöhung der Agilität des Fahrzeugs erreicht werden kann. Werden die Hinterräder 31a, 31b in entgegengesetztem Drehsinn zu den Vorderrädern eingelenkt, verringert sich die Gierrate des Fahrzeugs, so dass das Fahrzeug in kritischen Fahrsituationen stabilisiert werden kann.

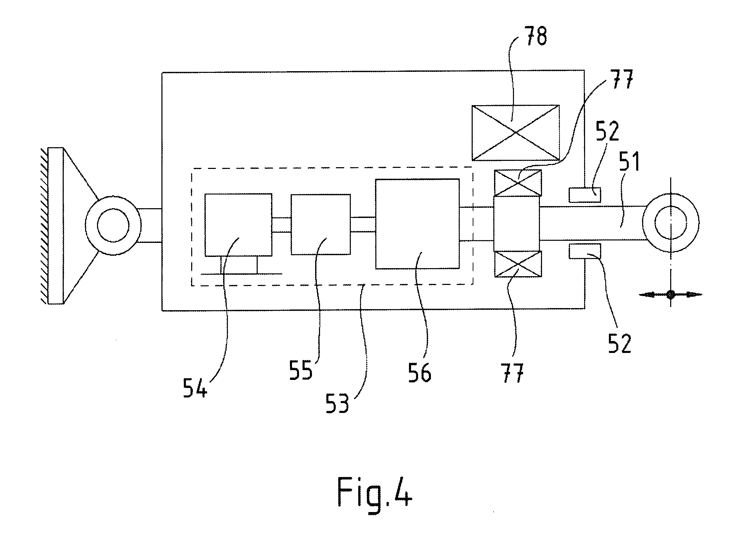

Figur 4 zeigt eine schematische Darstellung des Aufbaus der Spurstange 15 in einer bevorzugten Ausführungsform der Erfindung. Wie aus der Figur 4 ersichtlich ist, ist der Lagermittelsteg 16 fest an das Gehäuse 19 montiert. Das Gelenk 18 ist an dem distalen Ende der Schubstange 51 angebracht, der innerhalb des Gehäuses verschiebbar ist und durch Axiallager 52 geführt wird. Zur Verschiebung der Schubstange 51 enthält die Spurstange 15 eine elektromechanische Antriebsbaugruppe 53. Diese umfasst einen Elektromotor 54, dessen Motorwelle über ein Übersetzungsgetriebe 55 mit einem Rotations-/Translationsgetriebe 56 gekoppelt ist, das die Rotationsbewegung der Motorwelle in eine Translationsbewegung der Schubstange 51 umwandelt und vorzugsweise als ein Gewindetrieb ausgebildet ist. Je nach Drehsinn der Motorwelle wird die Schubstange 51 in distale oder proximale Richtung bewegt.

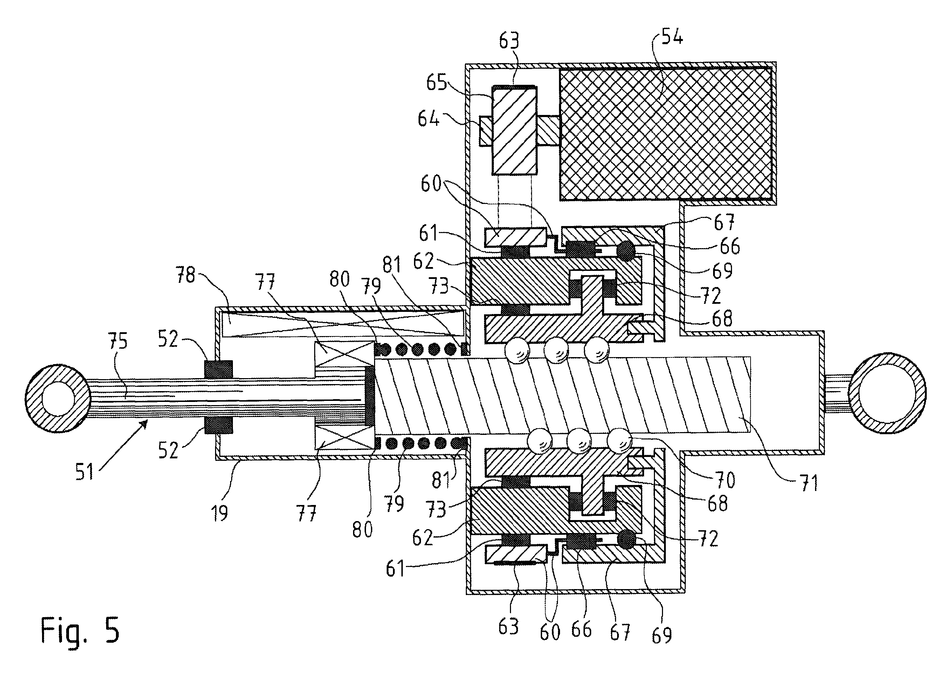

Die Antriebseinheit 53 weist zudem eine Blockiereinrichtung auf, die so ausgebildet ist, dass die Schubstange 51 ausschließlich mithilfe des Elektromotors 54 innerhalb des Gehäuses 19 verschiebbar ist. In einer Ausführungsform der Erfindung weist das Übersetzungsgetriebe 55 und/oder das Rotations-/Translationsgetriebe 56 dabei eine Selbsthemmung auf, die ein derartiges Blockieren bewirkt. Weitere Ausführungsformen der Blockiereinrichtung werden im Folgenden im Zusammenhang mit den Figur 5 bis 7 beschrieben.

Die Position bzw. Lage der Schubstange 51 innerhalb des Gehäuses 19 kann mit einem dem Fachmann an sich bekannten, berührungslos arbeitenden Wegsensor erfasst werden. Der Sensor verfügt dabei über einen Signalgeber 77, der fest mit der Schubstange 51 verbunden ist, sowie über einen Signalaufnehmer 78, der an dem Gehäuse 19 angeordnet ist. Der Signalaufnehmer 78 ist signalmäßig mit dem Hinterachslenkungssteuergerät 35 verbunden, wobei die Sensorsignale zum Einregeln der Sollwertvorgaben für die Spurstangenlänge bzw. den Radeinschlagswinkel herangezogen werden.
Figur 5 zeigt einen schematischen Querschnitt durch eine erfindungsgemäße Spurstange 15 in einer vorteilhaften Ausführungsform, bei der das Rotations-/Translationsgetriebe 56 als Kugelgewindetrieb (KGT) ausgebildet ist.

Der Elektromotor 54 treibt über das Übersetzungsgetriebe 55, einen ringförmigen Freilaufkäfig 60 an, der mittels eines Axial-/Radiallagers 61 auf dem äußeren Umfang eines Klemmrings 62 drehbar gelagert ist. Der Klemmring 62 ist an einer Stirnseite fest mit dem Gehäuse 19 der Spurstange 15 verbunden. Das Übersetzungsgetriebe 55 ist bei der in Figur 5 dargestellten Ausführungsform als ein Riemengetriebe ausgebildet, bei dem ein Riemen 63 die Rotationsbewegung einer auf die Motorwelle 64 aufgesetzten Riemenscheibe 65 auf den Freilaufkäfig 60 überträgt. Gleichfalls kann das Übersetzungsgetriebe jedoch auch als Zahnrad- oder Stirnradgetriebe ausgebildet sein.

Bei einem ausreichend großen Antriebsmoment des Elektromotors 54 treibt der Freilaufkäfig 60 über die Freilaufeinrichtung 66, die später noch näher beschrieben wird, ein Kupplungselement 67 an, das mit der Mutter 68 des KGT im Eingriff steht. Das Kupplungselement 67 ist mittels eines Axial-/Radiallagers 69 ebenfalls auf dem äußeren Umfang des Klemmrings 62 drehbar gelagert.

Die Mutter 68 greift über eine Anzahl Kugeln 70 in einen Spindelabschnitt 71 der Schubstange 51 ein. Im Innenbereich des Klemmrings 62 ist die Mutter 68 dabei mithilfe eines Axiallagers 72 und eines Radiallagers 73 gelagert.

Der Spindelabschnitt 71 schließt an seinem radträgerseitigen Ende an einen weiteren Abschnitt 75 der Schubstange 51 an. An dem weiteren Abschnitt 75 wird die Schubstange 51 durch Linearführungen 52 mit, die an einer radträgerseitigen Austrittsöffnung des Gehäuses 19 angeordnet sind, fixiert. Die Linearführung 52 sichert die Schubstange 51 dabei auch gegenüber einer Verdrehung.

Darüber hinaus ist die Schubstange 51 mittels einer Kompensationsfeder 79 abgestützt, die zwischen einem ersten, an der Schubstange 51 angebrachten Druckring 80 und einem zweiten, an dem die Antriebseinheit beherbergenden Gehäuseteil montierten Druckring 81 angeordnet ist. Durch die Kompensationsfeder 79 werden Druckkräfte, die im beladenen Zustand des Kraftfahrzeugs in Richtung des Hilfsrahmens 1 auf die Spurstange 15 wirken zumindest teilweise abgestützt. Würde dies nicht geschehen, so müsste von dem Antriebsmotor 54 bei einer Längenvergrößerung der Spurstange 15 ein Offsetmoment zur Überwindung dieser Druckkräfte bereitgestellt werden. Bei einer Längenverringerung würden die Druckkräfte unterstützend wirken, so dass ein wesentlich geringeres Motormoment erforderlich wäre. Der Motorbetrieb würde somit unsymmetrisch bezüglich der Drehrichtung werden. Dies wird jedoch durch die Kompensationsfeder 79 verhindert, die einen symmetrischen und energetisch sinnvollen Motorbetrieb sicherstellt.

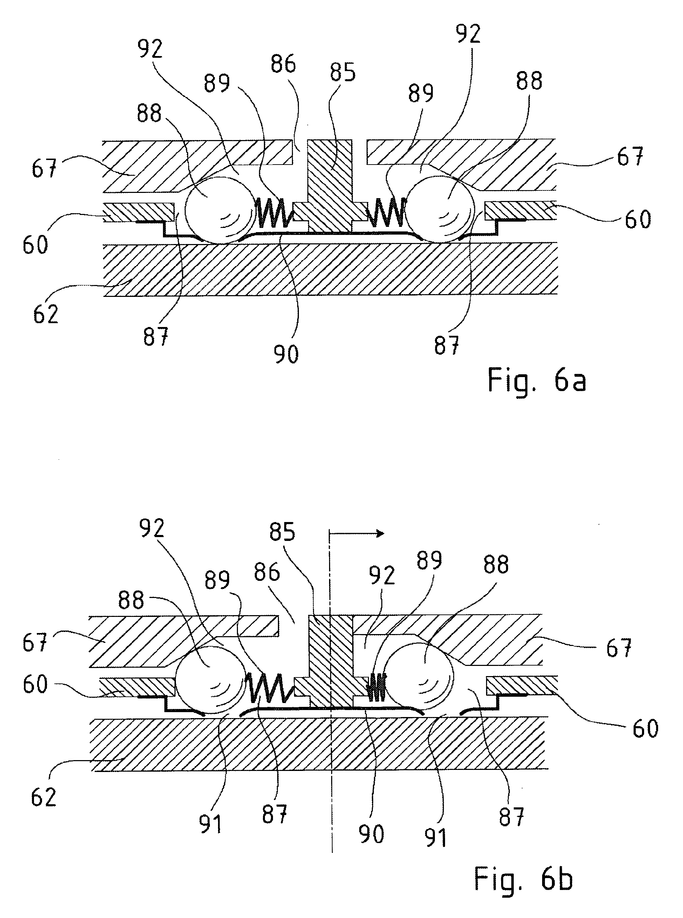

In den Figuren 6a und 6b, die einen schematischen Querschnitt durch die Freilaufeinrichtung 66 in zwei verschiedenen Betriebzuständen zeigen, ist die Freilaufeinrichtung 66 in größerem Detail dargestellt. Wie in den Figuren dargestellt, wird der Freilaufkäfig 60 zwischen dem Klemmring 62 und dem Kupplungselement 67 geführt. Er weist dabei an wenigstens einer Stelle auf seinem Umfang einen radial ausgerichteten Eingriffszapfen 85 auf, der in eine ebenfalls radial ausgerichtete Öffnung 86 des Kupplungselements 67 eingreift. Die Querschnittsfläche der Öffnung 86 ist dabei größer als die Querschnittsfläche des Eingriffszapfens 85, so dass ein Spiel entsteht.

In Umfangsrichtung des Freilaufkäfigs 60 befinden sich neben dem Eingriffszapfen 85 Aussparungen 87, in die kugelförmige Klemmkörper 88 eingebracht sind, welche jeweils durch eine Druckfeder 89 nach außen (d.h. in Richtung von dem Eingriffszapfen 85 weg) gedrückt werden. Zu dem Klemmring 62 hin werden die Aussparungen 87 durch ein Freistellelement 90 begrenzt, das seinerseits Aussparungen 91 aufweist, die einen geringeren Durchmesser haben als die Klemmkörper 88 und im Randbereich vorzugsweise muldenförmig ausgeführt sind. Die Aussparungen 91 sind insbesondere so dimensioniert, dass die in den Aussparungen 91 befindlichen Klemmkörper 88 mit dem Klemmring 62 in Kontakt gebracht werden können.

Im Bereich des Kupplungselements 67 greifen die Klemmkörper 88 in Taschen 92 ein, die in Umfangsrichtung des Kupplungselements 67 ausgerichtet und zumindest abschnittsweise keilförmig ausgebildet sind, wobei sie sich nach außen hin (d.h. in Richtung von der Öffnung 86 weg) verjüngen. Die Aussparungen 91 des Freistellelements 90 sind so angeordnet, dass zwischen einem in einer Aussparung 91 befindlichen Klemmkörper 88 und dem äußeren Rand der Aussparung 87 des Freilaufkäfigs 60 ein Freiraum verbleibt.

Mittels der Druckfedern 89 werden die Klemmkörper 88 gegen die Klemmrampen der Taschen 92 gedrückt, wodurch der Freilaufkäfig 60 fixiert wird, wie es in der Figur 6a dargestellt ist. Die Druckfedern 89 sind dabei so dimensioniert, dass geringe Drehmomente, die durch Störkräfte verursacht werden, die auf das mit der Spurstange 15 verbundene Hinterrad einwirken, die Klemmkörper 88 nicht aus den Aussparungen 91 des Freistellelements 90 treiben. Die Störkräfte werden somit von dem Kupplungselement 67 über die Klemmkörper 88 in den Klemmring 62 abgeleitet. Bei unbestromtem Motor wird die Antriebseinheit der Spurstange 25 auf diese Weise blockiert, so dass die Störkräfte nicht zu einer Längenveränderung der Spurstange 15 führen.

Wird der Elektromotor 54 angesteuert, überträgt er sein Antriebsmoment auf den Freilaufkäfig 60, so dass sich die Eingriffszapfen 85 in Umfangsrichtung bewegen. Wie anhand der Figur 6b veranschaulicht ist, wird dabei das Spiel des Eingriffszapfens 85 in der Öffnung 86 in eine Richtung überwunden und die in Bewegungsrichtung des Eingriffszapfens 85 liegende Druckfeder 89 zusammengedrückt, so dass der zugehörige Klemmkörper 88 aus der ihm zugeordneten Aussparung 91 gedrückt wird und den Kontakt zu dem Klemmring 62 verliert. Der andere Klemmkörper bewegt sich innerhalb der Tasche 92 in Richtung der Öffnung 86 - d.h. in einen breiteren Abschnitt der Tasche 92 - und wird aufgrund dessen von der zugehörigen Druckfeder 89 in einer der Bewegungsrichtung des Eingriffszapfens 85 entgegensetzten Richtung aus der entsprechenden Aussparung 91 des Freilaufkäfigs in den Freiraum 93 gedrückt. Auf diese Weise verliert er ebenfalls den Kontakt zu dem Klemmring 62. Der erreichte Betriebszustand, der in Figur 6b dargestellt ist, entspricht der Freilaufstellung der Freilaufeinrichtung 66.

Die Freilaufeinrichtung 66 stellt somit sicher, dass die Spurstange 15 bei unbestromtem Elektromotor mechanisch geklemmt und in ihrer Länge nicht veränderbar ist. Gegenüber einer ebenfalls denkbaren Ausführungsform der Antriebseinheit der Spurstange 15 mit einem selbsthemmenden Getriebe hat die Ausführungsform mit dem Freilauf den Vorteil, dass ein besserer mechanischer Wirkungsgrad erreicht werden kann.

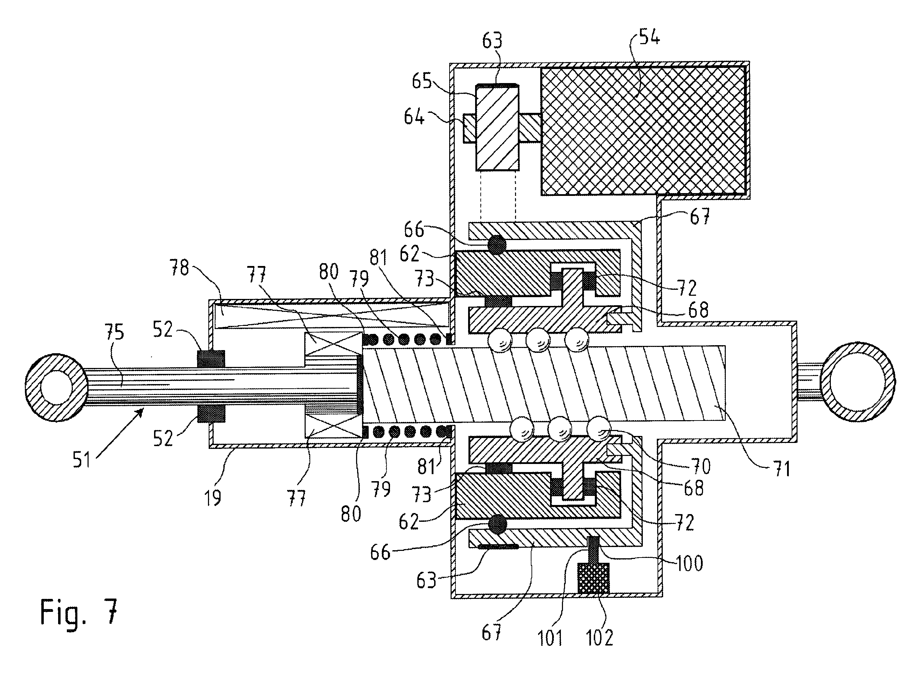

Eine weitere Ausführungsform eines in seiner Länge veränderbaren Radführungsgliedes und insbesondere der längenverstellbaren Spurstange 15 ist in der Figur 7 dargestellt. Diese Ausführungsform ist bevorzugt, da sie weniger aufwändig ist, als die in der Figur 5 dargestellte Ausführungsform und einen ähnlichen hohe mechanischen Wirkungsgrad gewährleistet.

Bei der in Figur 7 dargestellten Ausführungsform wird auf den die Freilaufeinrichtung 67 sowie auf den Freilaufkäfig 60 verzichtet. Das Kupplungselement 67 ist somit über das Rotations-/Rotationsgetriebe direkt mit der Motorwelle 64 verbunden. Der Antrieb des Kupplungselements 67 erfolgt hier über den Riemen 63, der die Rotationsbewegung der Motorwelle 64 auf das Kupplungselement 67 überträgt.

Auf dem Umfang der Kupplungseinrichtung 67 sind hier zueinander regelmäßig beabstandete Löcher 100 vorgesehen, in die ein oder mehrere mit dem Gehäuse 19 verbundene Magnetstößel 101, die von Elektromagneten 102 betätigt werden, formschlüssig eingreifen können. Der Eingriff erfolgt dabei vorzugsweise federgetrieben bei unbestromtem Elektromagneten 102, während der Magnetstößel 101 bei bestromtem Elektromagneten 102 in Freilaufstellung, d.h. außerhalb der Löcher 100, gehalten wird.

## Patentansprüche

1. Lenkvorrichtung zum Einstellen eines Radeinschlagswinkels eines Rades eines Kraftfahrzeugs, insbesondere eines,Hinterrades, umfassend wenigstens ein Radführungsglied (15), über das ein Radträger (3) des Rades mit einem Fahrzeugaufbau verbunden ist, wobei der Radträger(3)um eine im Wesentlichen parallel zur Radebene verlaufende Drehachse schwenkbar ist und das Radführungsglied (15) beabstandet von der Drehachse an dem Radträger (3) angelenkt ist, und wobei das Radführungsglied (15) mittels einer Antriebseinheit (53) in seiner Länge verstellbar ist, **dadurch gekennzeichnet, dass** die Antriebseinheit eine Blockiereinrichtung aufweist, bei der wenigstens ein Magnetstößel (101) durch ein Ausschalten eines Elektromagneten (102) formschlüssig in eine Aufnahme (100) einer Mutter (68) oder eines Kupplungselements (67) einführbar ist, wodurch die Antriebseinheit (53) blockierbar ist.

2. Lenkvorrichtung nach Anspruch 1,
**dadurch gekennzeichnet,**
**dass** das Radführungsglied (15) eingliedrig ausgeführt ist und über ein erstes Gelenk (13) an dem Fahrzeugaufbau (1) und über ein zweites Gelenk (14) an dem Radträger (3) angelenkt ist.

3. Lenkvorrichtung nach Anspruch 1 oder 2,
**dadurch gekennzeichnet,**
**dass** es sich bei dem Radführungsglied (15) um eine Spurstange (12; 15) und/oder einen Querlenker (4) einer Einzelradaufhängung handelt.

4. Lenkvorrichtung nach einem der vorangegangenen Ansprüche, **dadurch gekennzeichnet,**
**dass** das Radführungsglied (15) ein Gehäuse (19) und eine Schubstange (51) umfasst, die mittels einer elektromechanischen Antriebseinheit (53) axial gegeneinander verschiebbar sind.

5. Lenkvorrichtung nach Anspruch 4,
**dadurch gekennzeichnet,**
**dass** die Antriebseinheit (53) in dem Gehäuse (19) enthalten ist.

6. Lenkvorrichtung nach einem der vorangegangenen Ansprüche, **dadurch gekennzeichnet,**
**dass** die Antriebseinheit (53) einen Elektromotor (54) und einen von dem Elektromotor (54) angetriebenen Gewindespindel-Mutter-Trieb (68, 70, 71) enthält, der eine Mutter (68) aufweist, die in einen Spindelabschnitt (71) der Schubstange (51) eingreift.

7. Lenkvorrichtung nach Anspruch 6,
**dadurch gekennzeichnet,**
**dass** es sich bei dem Gewindespindel-Mutter-Trieb (68, 70, 71) um einen Kugelgewindetrieb handelt.

8. Lenkvorrichtung nach Anspruch 6,
**dadurch gekennzeichnet,**
**dass** die Schubstange (51) mittels einer Kompensationsfeder (79) an dem Gehäuse (19) abgestützt ist.

9. Lenkvorrichtung nach Anspruch 8,
**dadurch gekennzeichnet,**
**dass** die Federkraft der Kompensationsfeder (79) einer Längenverkürzung des Radführungsgliedes (15) entgegenwirkt.

10. Lenkvorrichtung nach Anspruch 6,
**dadurch gekennzeichnet,**
**dass** eine Antriebswelle (64) des Elektromotors (54) über ein Getriebe (55) mit der Mutter (68) des Gewindespindel-Mutter-Triebes (68, 70, 71) verbunden ist.

11. Lenkvorrichtung nach Anspruch 10,
**dadurch gekennzeichnet,**
**dass** das Getriebe (55) und/oder der Gewindespindel-Mutter-Trieb (68, 70, 71) die Blockiereinrichtung aufweist.

12. Lenkvorrichtung nach Anspruch 10,
**dadurch gekennzeichnet,**
**dass** ein Klemmring (62) fest mit einer inneren Wand des Gehäuses (19) verbunden ist und das Getriebe (55) ein im Außenbereich des Klemmrings (62) drehbar gelagertes Kupplungselement (67) aufweist, wobei das Kupplungselement (67) mit der Mutter (68) des Gewindespindel-Mutter-Triebes (68, 70, 71), die im Innenbereich des Klemmrings (62) drehbar gelagert ist, im Eingriff steht.

13. Lenkvorrichtung nach Anspruch 1 und 12,
**dadurch gekennzeichnet,**
**dass** mehrere Aufnahmen (100) für den Magnetstößel (101) regelmäßig beabstandet auf dem Umfang der Mutter (68) und/oder des Kupplungselements (67) angeordnet sind.

14. Lenkvorrichtung nach Anspruch 10,
**dadurch gekennzeichnet,**
**dass** das Getriebe (55) eine Freilaufeinrichtung (66) aufweist, die in einem ersten Drehmomentbereich einen Freilauf der Mutter (68) des Gewindespindel-Mutter-Triebes (68, 70, 71) und in einem zweiten Drehmomentbereich eine Blockierung der Mutter (68) bewirkt.

15. Lenkvorrichtung nach Anspruch 14,
**dadurch gekennzeichnet,**
**dass** die Freilaufeinrichtung (66) zwei Klemmkörper (88) umfasst, die innerhalb eines von dem Elektromotor (54) antreibbaren Freilaufkäfigs (60) zwischen dem Klemmring (62) und dem Kupplungselement (67) gehalten werden, wobei ein Eingriffszapfen (85) des Freilaufkäfigs (60) in eine Öffnung (86) des Kupplungselements mit Spiel eingreift und wobei die Klemmkörper (88) mittels an dem Eingriffszapfen (85) angreifenden und in Umfangsrichtung des Freilaufkäfigs (60) ausgerichteten Druckfedern (89) in keilförmige Taschen (92) des Kupplungselements (67) gedrückt werden und durch Aussparungen (91) eines mit dem Freilaufkäfig (60) verbundenen Freistellelements (90) hindurch mit dem Klemmring (62) in Kontakt bringbar sind.

16. Lenkvorrichtung nach Anspruch 15,
**dadurch gekennzeichnet,**
**dass** die Klemmkörper (88) bei einer Rotationsbewegung des Freilaufkäfigs (60) aufgrund einer Bewegung des Eingriffszapfens (85) in der Öffnung des Kupplungselements (67) aus den Aussparungen (91) des Freistellelements (90) gedrückt werden und den Kontakt zu dem Klemmring (62) verlieren.

17. Lenkvorrichtung nach Anspruch 4,
**dadurch gekennzeichnet,**
**dass** die relative Lage der Schubstange (51) in Bezug auf das Gehäuse (19) des Radführungsgliedes (15) mittels eines berührungslosen Wegsensors (77, 78) erfassbar ist.

18. Kraftfahrzeug, umfassend ein rechtsseitiges und ein linksseitiges Hinterrad,
**dadurch gekennzeichnet,**
**dass** beiden Hinterrädern (31a; 31b) jeweils eine Lenkvorrichtung nach einem der vorangegangenen Ansprüche zugeordnet ist.

19. Kraftfahrzeug nach Anspruch 18,
**dadurch gekennzeichnet,**
**dass** das Radführungsglied (15b) des rechten Hinterrades (31b) unabhängig von dem Radführungsglied (15a) des linken Hinterrades (31a) in seiner Länge verstellbar ist.

## Claims

1. Steering mechanism for adjusting a wheel steer angle of a motor vehicle wheel, particularly a rear wheel, comprising at least one wheel control member (15), via which a hub carrier (3) of the wheel is connected to a vehicle body, the hub carrier (3) being pivotable about an axis of rotation that extends substantially parallel to the wheel plane and the wheel control member (15) being pivotally attached to the hub carrier (3) at a distance from the axis of rotation, and the length of the wheel control member (15) being adjustable by means of a drive unit (53), **characterized in that** the drive unit has a locking device, in which at least one magnetic plunger (101) can be introduced with positive engagement into a receptacle (100) in a nut (68) or a coupling element (67) by switching off an electromagnet (102), thereby enabling the drive unit (53) to be locked.

2. Steering mechanism according to Claim 1, **characterized in that** the wheel control member (15) is embodied as a single member and is pivotally attached to the vehicle body (1) by means of a first joint (13) and to the hub carrier (3) by means of a second joint (14).

3. Steering mechanism according to Claim 1 or 2, **characterized in that** the wheel control member (15) is a track rod (12; 15) and/or a transverse link (4) of an independent wheel suspension.

4. Steering mechanism according to one of the preceding claims, **characterized in that** the wheel control member (15) comprises a housing (19) and a connecting rod (51), which can be moved axially relative to one another by means of an electromechanical drive unit (53).

5. Steering mechanism according to Claim 4, **characterized in that** the drive unit (53) is contained in the housing (19).

6. Steering mechanism according to one of the preceding claims, **characterized in that** the drive unit (53) contains an electric motor (54) and a screw-and-nut drive (68, 70, 71), which is driven by the electric motor (54) and has a nut (68) that engages in a screw portion (71) of the track rod (51).

7. Steering mechanism according to Claim 6, **characterized in that** the screw-and-nut drive (68, 70, 71) is a ball screw.

8. Steering mechanism according to Claim 6, **characterized in that** the connecting rod (51) is supported on the housing (19) by means of a compensation spring (79).

9. Steering mechanism according to Claim 8, **characterized in that** the spring force of the compensation spring (79) counteracts a reduction in the length of the wheel control member (15).

10. Steering mechanism according to Claim 6, **characterized in that** a drive shaft (64) of the electric motor (54) is connected to the nut (68) of the screw-and-nut drive (68, 70, 71) via a transmission (55).

11. Steering mechanism according to Claim 10, **characterized in that** the transmission (55) and/or the screw-and-nut drive (68, 70, 71) has the locking device.

12. Steering mechanism according to Claim 10, **characterized in that** a wedging ring (62) is firmly connected to an inner wall of the housing (19), and the transmission (55) has a coupling element (67) which is rotatably mounted in the outer region of the wedging ring (62), the coupling element (67) being in engagement with the nut (68) of the screw-and-nut drive (68, 70, 71), which nut is rotatably mounted within the wedging ring (62).

13. Steering mechanism according to Claim 1 and 12, **characterized in that** a plurality of receptacles (100) for the magnetic plunger (101) are arranged at regular intervals on the circumference of the nut (68) and/or the coupling element (67).

14. Steering mechanism according to Claim 10, **characterized in that** the transmission (55) has a freewheel device (66), which brings about freewheeling of the nut (68) of the screw-and-nut drive (68, 70, 71) in a first torque range and locking of the nut (68) in a second torque range.

15. Steering mechanism according to Claim 14, **characterized in that** the freewheel device (66) comprises two wedging elements (88), which are held between the wedging ring (62) and the coupling element (67) within a freewheel cage (60) that can be driven by the electric motor (54), an engagement pin (85) of the freewheel cage (60) engaging with play in an opening (86) in the coupling element, and the wedging elements (88) being pushed into wedge-shaped pockets (92) in the coupling element (67) by means of compression springs (89), which engage on the engagement pin (85) and are oriented in the circumferential direction of the freewheel cage (60), and being able to be brought into contact with the wedging ring (62) through apertures (91) in a clearance element (90) connected to the freewheel cage (60).

16. Steering mechanism according to Claim 15, **characterized in that**, owing to a movement of the engagement pin (85) in the opening in the coupling element (67), the wedging elements (88) are pushed out of the apertures (91) in the clearance element (90) during a rotary motion of the freewheel cage (60) and lose contact with the wedging ring (62).

17. Steering mechanism according to Claim 4, **characterized in that** the relative position of the connecting rod (51) in relation to the housing (19) of the wheel control member (15) can be detected by means of a contactless displacement sensor (77, 78).

18. Motor vehicle comprising a right-hand and a left-hand rear wheel, **characterized in that** a respective steering mechanism according to one of the preceding claims is assigned to each of the two rear wheels (31a; 31b).

19. Motor vehicle according to Claim 18, **characterized in that** the length of the wheel control member (15b) for the right-hand rear wheel (31b) can be adjusted independently of the wheel control member (15a) for the left-hand rear wheel (31a).

## Revendications

1. Dispositif de braquage qui établit un angle de braquage d'une roue d'un véhicule automobile, en particulier d'une roue arrière,
comprenant au moins un organe (15) de guidage de roue par lequel un support (3) de la roue est relié au châssis du véhicule,
le support (3) de roue pouvant pivoter autour d'un axe de rotation qui s'étend essentiellement en parallèle au plan de la roue et l'organe (15) de guidage de roue étant articulé à distance de l'axe de rotation du support (3) de roue,
la longueur de l'organe (15) de guidage pouvant être ajustée au moyen d'une unité d'entraînement (53), **caractérisé en ce que**
l'unité d'entraînement présente un dispositif de blocage par lequel au moins un poussoir magnétique (101) peut être inséré en correspondance géométrique dans un logement (100) d'un écrou (68) ou d'un élément d'accouplement (67) par le branchement d'un électoaimant (102), ce qui bloque l'unité d'entraînement (53).

2. Dispositif de braquage selon la revendication 1, **caractérisé en ce que** l'organe (15) de guidage de roue est réalisé d'un seul tenant et est articulé par une première articulation (13) sur le châssis (1) du véhicule et par une deuxième articulation (14) sur le support (3) de roue.

3. Dispositif de braquage selon les revendications 1 ou 2, **caractérisé en ce que** l'organe (15) de guidage de roue est une barre d'accouplement (12; 15) ou un bras transversal (4) de la suspension de la roue.

4. Dispositif de braquage selon l'une des revendications précédentes, **caractérisé en ce que** l'organe (15) de guidage de roue comporte un carter (19) et une barre de poussée (51) qui peuvent coulisser axialement l'un par rapport à l'autre au moyen d'une unité électromagnétique d'entraînement (53).

5. Dispositif de braquage selon la revendication 4, **caractérisé en ce que** l'unité d'entraînement (53) est reprise dans le carter (19).

6. Dispositif de braquage selon l'une des revendications précédentes, **caractérisé en ce que** l'unité d'entraînement (53) contient un moteur électrique (54) et une transmission (68, 70, 71) à écrou et tige filetée entraîné par le moteur électrique (54) et qui présente un écrou (68) qui s'engage dans une partie filetée (71) de la barre de poussée (51).

7. Dispositif de braquage selon la revendication 6, **caractérisé en ce que** la transmission (68, 70, 71) à écrou et tige filetée est une transmission filetée à billes.

8. Dispositif de braquage selon la revendication 6, **caractérisé en ce que** la barre de poussée (51) est soutenue sur le carter (19) au moyen d'un ressort de compensation (79).

9. Dispositif de braquage selon la revendication 8, **caractérisé en ce que** la force élastique du ressort de compensation (79) s'oppose à un raccourcissement de la longueur de l'organe (15) de guidage de roue.

10. Dispositif de braquage selon la revendication 6, **caractérisé en ce que** l'arbre d'entraînement (64) du moteur électrique (54) est relié à l'écrou (68) de la transmission (68, 70, 71) à écrou et tige filetée par l'intermédiaire d'une transmission (55).

11. Dispositif de braquage selon la revendication 10, **caractérisé en ce que** la transmission (55) et/ou l'entraînement (68, 70, 71) à écrou et tige filetée présentent le dispositif de blocage.

12. Dispositif de braquage selon la revendication 10, **caractérisé en ce qu'**une bague de serrage (62) est reliée solidairement à une paroi intérieure du carter (19) et la transmission (55) présente un élément d'accouplement (67) monté à rotation dans la partie extérieure de la bague de serrage (62), l'élément d'accouplement (67) engageant l'écrou (68) de la transmission (68, 70, 71) à écrou et tige filetée montée à rotation dans la partie intérieure de la bague de serrage (62).

13. Dispositif de braquage selon les revendications 1 et 12, **caractérisé en ce que** plusieurs logements (100) pour le poussoir magnétique (101) sont disposés à intervalles réguliers à la périphérie de l'écrou (68) et/ou de l'élément d'accouplement (67).

14. Dispositif de braquage selon la revendication 10, **caractérisé en ce que** la transmission (55) présente un dispositif de rotation libre (66) qui a pour effet dans une première plage du couple de rotation une rotation libre de l'écrou (68) de la transmission (68, 70, 71) à écrou et tige filetée et dans une deuxième plage de couple de rotation un blocage de l'écrou (68).

15. Dispositif de braquage selon la revendication 14, **caractérisé en ce que** le dispositif (66) de rotation libre comporte deux corps de serrage (88) maintenus à l'intérieur d'une cage (60) de rotation libre entraînée par le moteur électrique (54) et disposée entre la bague de serrage (62) et l'élément d'accouplement (67), un tourillon d'engagement (85) de la cage (60) de rotation libre s'engageant avec un jeu dans une ouverture (86) de l'élément d'accouplement, les corps de serrage (88) étant repoussés dans des poches (92) en forme de biseau de l'élément d'accouplement (67) au moyen de ressorts de poussée (89) qui engagent le tourillon d'engagement (85) et qui sont orientés dans la direction périphérique de la cage (60) à rotation libre et pouvant être amenés en contact avec la bague de serrage (62) à travers des découpes (91) ménagées dans un élément de libération (90) relié à la cage (60) de rotation libre.

16. Dispositif de braquage selon la revendication 15, **caractérisé en ce que** lorsque la cage (60) de rotation libre se déplace en rotation suite à un déplacement du tourillon d'engagement (85) dans l'ouverture de l'élément d'accouplement (67), les corps de serrage (88) sont repoussés hors des découpes (91) de l'élément (90) de libération et perdent le contact avec la bague de serrage (62).

17. Dispositif de braquage selon la revendication 4, **caractérisé en ce que** la position relative de la barre de poussée (51) par rapport au carter (19) de l'organe (15) de guidage de roue peut être détectée au moyen d'un détecteur de déplacement (77, 78) travaillant sans contact.

18. Véhicule automobile comprenant une roue arrière côté droit et une roue arrière côté gauche,
**caractérisé en ce que**
un dispositif de braquage selon l'une des revendications précédentes, est associé à chacune des deux roues arrières (31a; 31b).

19. Véhicule automobile selon la revendication 18, **caractérisé en ce que** la longueur de l'organe (15b) de guidage de la roue arrière droite (31b) peut être modifiée indépendamment de celle de l'organe (15a) de guidage de la roue arrière gauche (31a).
